# EUROPEAN PATENT APPLICATION

(11) **EP 3 922 951 A1**
(43) Date of publication of application: **15.12.2021**
(21) Application number: 21151644.8
(22) Date of filing: 14.01.2021
(51) Int. Cl.: G01C 21/36, G06T 17/05

(54) **METHOD AND DEVICE FOR DRAWING A THREE-DIMENSIONAL ROAD NETWORK MAP, APPARATUS AND MEDIUM**

(30) Priority: 10.06.2020 CN 202010524207
(71) Applicant: BAIDU ONLINE NETWORK TECHNOLOGY (BEIJING) CO., LTD., Beijing 100085 (CN)
(72) Inventor: ZENG, Yi, BEIJING, 100085 (CN)
(74) Representative: Brevalex

(57) **Abstract**

The present application discloses a method and device for drawing a three-dimensional road network map, an apparatus and a storage medium, relating to the navigation technology and the autonomous driving technology. Wherein the method includes: determining a set of associated roads with a covering relationship; wherein the covering relationship is used to represent that there exists a projecting intersection point of roads in the set of associated roads, on a two-dimensional road network map; determining a reference road on a ground surface in the set of associated roads, according to actual heights of the respective roads in the set of associated roads; drawing the roads in the set of associated roads on the three-dimensional road network map, according to the reference road and differences between the actual height of the reference road and the actual heights of other roads in the set of associated roads.

## Description

### TECHNICAL FIELD

The embodiments of the present application relate to the field of computer technology, in particular, to the fields of navigation technology and autonomous driving technology, and more specifically to method and device for drawing a three-dimensional road network map, apparatus and medium.

### BACKGROUND

Drawing an electronic map is an important technical aspect in the fields of navigation and automatic driving.

### SUMMARY

The embodiments of the present application provide a method and device for drawing a three-dimensional road network map, apparatus, and medium.

According to an aspect of the embodiments of the present application, a method for drawing a three-dimensional road network map is provided, including:
determining a set of associated roads with a covering relationship; wherein the covering relationship is used to represent that there exists a projecting intersection point of roads in the set of associated roads, on a two-dimensional road network map;
determining a reference road on a ground surface in the set of associated roads, according to actual heights of the respective roads in the set of associated roads;
drawing the roads in the set of associated roads on the three-dimensional road network map, according to the reference road and differences between the actual height of the reference road and the actual heights of other roads in the set of associated roads.

According to another aspect of the embodiments of the present application, a device for drawing a three-dimensional road network map is provided, including:
associated road set determination module configured for determining a set of associated roads with a covering relationship; wherein the covering relationship is used to represent that there exists a projecting intersection point of roads in the set of associated roads, on a two-dimensional road network map;
reference road determination module configured for determining a reference road on a ground surface in the set of associated roads, according to actual heights of the respective roads in the set of associated roads; and
three-dimensional road network drawing module configured for drawing the roads in the set of associated roads on the three-dimensional road network map, according to the reference road and differences between the actual height of the reference road and the actual heights of other roads in the set of associated roads.

According to another aspect of the embodiments of the present application, an electronic apparatus is provided, including:
at least one processor; and
a memory communicatively connected to the at least one processor; wherein,
the memory stores instructions executable by the at least one processor, the instructions, when executed by the at least one processor, cause the at least one processor to perform the method for drawing a three-dimensional road network map as described in any of the embodiments of the present application.

According to another aspect of the embodiments of the present application, a non-transitory computer-readable storage medium that stores computer instructions is provided, and the computer instructions, when executed by a computer, cause the computer to execute the method for drawing a three-dimensional road network map as described in any of the embodiments of the present application.

It should be understood that the contents described herein are neither intended to identify key or important features of the embodiments of the present application, nor limit the scope of the present application. Other features of the present application will be easier to be understood from the following description.

### BRIEF DESCRIPTION OF THE DRAWINGS

The accompanying drawings are provided for better understanding of the present disclosure, instead of limiting the present application, wherein:
FIG.1 is a flowchart of a method for drawing a three-dimensional road network map disclosed according to an embodiment of the present application;
FIG.2 is a flowchart of another method for drawing a three-dimensional road network map disclosed according to an embodiment of the present application;
FIG.3 is a schematic diagram of the determination of projecting intersection points disclosed according to an embodiment of the present application;
FIG.4 is a flowchart of another method for drawing a three-dimensional road network map disclosed according to an embodiment of the present application;
FIG.5 is a flow diagram of a smoothing processing of the actual heights of roads disclosed according to an embodiment of the present application. ;
FIG.6 is a schematic diagram of the connection points between a diverging road and a pedestrian passage disclosed according to an embodiment of the present application;
FIG.7 is a smooth schematic diagram of an initial shape of a pedestrian passage disclosed according to an embodiment of the present application;
FIG.8 is a structural schematic diagram of a device for drawing a three-dimensional road network map disclosed according to an embodiment of the present application; and
FIG.9 is a block diagram of an electronic apparatus disclosed according to an embodiment of the present application.

### DETAILED DESCRIPTION

Exemplary embodiments of the present application are described below with reference to the accompanying drawings, including respective details of the embodiments of the present application to facilitate the understanding, and which should be considered as merely exemplary. Thus, it should be realized by those of ordinary skill in the art that respective changes and modifications can be made to the embodiments described herein without departing from the scope and spirit of the present application. Also, for the sake of clarity and conciseness, the contents of well-known functions and structures are omitted in the following description.

With the continuous improvement of the positioning capability of the handheld device and the acquisition equipment for acquiring map data, high-definition positioning and navigation have become an inevitable trend in future technical development. The products of three-dimensional map can achieve the restoration of the actual road network to a certain degree. The accuracy of the present products of three-dimensional map, however, is still very limited, for example, multiple roads are shown as having the same road height and thus the users might be misled during positioning.

The embodiments of the present application provide a method and device for drawing a three-dimensional road network map, apparatus, and medium so as to provide a new method for drawing a three-dimensional road network map, increasing the accuracy of drawing the three-dimensional road network map.

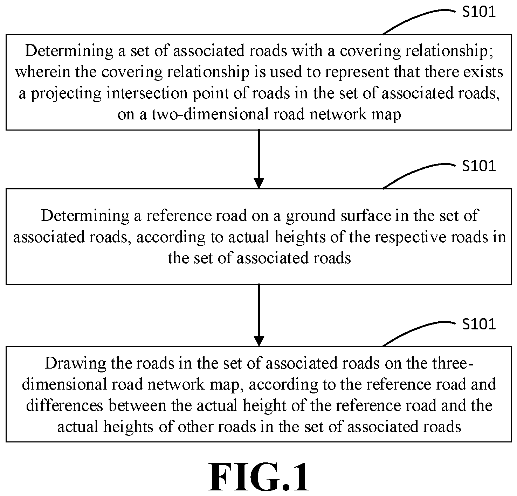

FIG.1 is a flowchart of a method for drawing a three-dimensional road network map disclosed according to an embodiment of the present application, and the embodiment of the present application can be applied to the case of how to draw a three-dimensional road network map, herein the road network map may refer to the electronic map at least including road network information. The method disclosed by the embodiments of the present application can be executed by a device for drawing a three-dimensional road network map, which may be implemented by software, hardware and/or firmware, and can be integrated in any electronic apparatus with computing capability, such as a server, a vehicle terminal, a mobile terminal, a tablet computer, etc.

As shown in FIG.1, the method for drawing a three-dimensional road network map disclosed by an embodiment of the present application may include:
S101, determining a set of associated roads with a covering relationship; wherein the covering relationship is used to represent that there exists a projecting intersection point of roads in the set of associated roads, on a two-dimensional road network map.

In particular, during drawing of a three-dimensional road network map, the set of associated roads with a covering relationship can be determined with the terrain data of the roads acquired in advance, according to the currently drawn road network region. Each set of associated roads includes at least two roads. The types of roads include tunnels, elevated roads, overpasses, etc. The terrain data of roads can be obtained by virtue of professional acquisition equipment, including but not limited to the actual heights of the respective roads, covering relationships of roads (or referred to as height hierarchy relationship), slope gradients and coordinates of latitude and longitude of roads, etc.

During the acquisition of the terrain data of roads, when there is a covering relationship between roads, the relationships of the upper and lower levels of the roads are recorded at a projecting intersection point (or referred to as a cross point). Exemplarily, a covering relationship between roads can be represented by a Zlevel value. Z represents the height direction (i.e. altitude direction) of the roads, and the Zlevel value may represent the hierarchy relationship of different roads at a projecting intersection point. For example, the greater the Zlevel value, the higher the level of the road. Assuming that the set of associated roads with a covering relationship includes two roads, then the road with a Zlevel value of 0 may be a road at the lower level, and the road with a Zlevel value of 1 may be a road at the upper level.

S102, determining a reference road on a ground surface in the set of associated roads, according to actual heights of the respective roads in the set of associated roads.

Wherein, the ground surface may refer to the ground. The actual height of the reference road on the ground surface has a stable change trend of data, for example, valley value or peak value will not occur, and under the coordinate system with the ground as the reference plane, the absolute value of the actual height of the reference road is the minimum in the set of associated roads. By analyzing the regularity of the numerical values corresponding to the actual heights of the respective roads, the reference road on the ground surface may be determined, such that the relative elevations of other roads in the set of associated roads may be calculated by using the actual height of the reference road, and thus it is avoided to use the actual heights of the roads directly, and moreover, the relative elevations between roads may be determined without manual field measurements, which not only ensures the accuracy of the calculation of the relative elevations, but also achieves the effects of saving labor costs and time costs.

S103, drawing the roads in the set of associated roads on the three-dimensional road network map, according to the reference road and differences between the actual height of the reference road and the actual heights of other roads in the set of associated roads.

Wherein, the other roads in the set of associated roads may refer to the roads, except the reference road, in the set of associated roads. In the set of associated roads, the relationships between height levels of the respective roads are certain. After the reference road is determined, the differences between the actual height of the reference road and those of other roads in the set of associated roads may be calculated, and a numerical symbol corresponding to a height difference may be set according to ad hierarchy relationship, so as to realize an accurate distinction between the roads above the reference road and below the reference road. For example, the height difference between a road above the reference road and the reference road may be set as a positive value, while the height difference between a road below the reference road and the reference road may be set as a negative value. Then, with the attribute information of the respective roads in the set of associated roads and the height differences between the respective roads, the respective roads may be drawn on a three-dimensional road network map. Wherein, the attribute information of each of the respective roads may include, but is not limited to, the width of the road, the slope gradient of the road, the surface of the road, the boundary lines of the road, the lane lines of the road, etc. It should be understood that data related to roads required by drawing may be adjusted, according to the drawing requirements during drawing a three-dimensional road network. Also, actual data values related to roads may be scaled down uniformly according to a preset scale of a map during drawing, and the preset scale of a map may be set according to the display effect of the map.

According to the technical solution of an embodiment of the present application, through combination of actual heights of roads and data of roads relating to a covering relationship during the drawing of a three-dimensional road network map, the relative elevations (the differences between actual heights of roads) between roads can be calculated quickly and accurately, with the increase of the accuracy of the drawing of a three-dimensional road network map.

According to the technical solution of an embodiment of the present application, with the differences of the actual heights between roads in the set of associated roads with a covering relationship as the relative elevations of roads in the process of drawing a three-dimensional road network map, it not only realizes the rapid and accurate calculation of the relative elevations between roads, but also ensures the accuracy of the height differences due to use of the actual heights, so that they are meaningful as the reference values of actual heights of the roads. The embodiment of the present application solves the problem of untruthfulness of the three-dimensional effect of the road network caused by that only virtual heights of all roads can be provided during the current drawing of a three-dimensional road network map. For example, in the related art, the situation that the heights of the respective roads are almost the same tends to be happened in a road network with its multi-levels being overlapped each other. Due to the use of the actual-height differences between roads, the embodiment of the present application improves the actual and differentiated display effect of heights of the roads in a three-dimensional road network, realizes the accurate reproduction of the hierarchy situation of actual roads, increases the accuracy of the drawing of a three-dimensional road network map, and ensures that more accurate navigation and positioning services are provided to users. At the same time, since there is no need to rely on manual field measurements for the relative elevations between roads, the embodiment of the present application saves a lot of labor costs and time costs, and helps to shorten the update cycle of a three-dimensional road network map and expedites the map iteration speed.

On the basis of the above technical solution, alternatively, the determining the reference road on ground surface in the set of associated roads, according to the actual heights of the respective roads in the set of associated roads, includes:
successively analyzing changes of the actual heights of the roads on each level, according to a from-bottom-to-top hierarchical relationship between the roads in the set of associated roads; and
determining a predetermined road, whose regularity of the change of the actual height complies with a condition of the ground surface, as the reference road.

Because the hierarchy relationship between the respective roads in the set of associated roads is certain, the from-bottom-to-top hierarchy relationship between roads may be used to determine the reference road, in order to increase the efficiency of the determination of the reference road. That is, the change of the actual height of the road at the bottom level is determined first to determine whether it is on the ground surface; if not, then move up to the road at the next level until it is determined that the regularity of the actual height change of a road complies with the condition of the ground surface and this road may be determined as the reference road. Wherein, the condition of the ground surface is a pre-defined condition for selecting a road on the ground surface, which may include: the actual height of a road changes gently, i.e., without valley value or peak value, and that road is positioned at the bottom level of the covering relationship. That is, the embodiment of the present application successively determines the regularity of the actual height change of each of the respective roads, according to the from-bottom-to-top hierarchy relationship between roads, and thus increases the efficiency of the determination of the reference road.

Furthermore, the method disclosed by an embodiment of the present application may further include:
if there is a road, during the successive analysis of the actual height change of each level of the roads, whose actual height at both sides of a projecting intersection point is greater than the actual height at the projecting intersection point, this road is marked as a subsidence road. This situation is directed to the underground tunnel. When there is a covering relationship between the underground tunnel and other roads, a projecting intersection point may correspond to the recessed point of the underground tunnel. Therefore, if the actual height of a road is determined to be a valley value at the projecting intersection point, the probability that this road is a subsidence road is great.

Correspondingly, after the determining the predetermined road, whose regularity of the change of the actual height complies with the condition of the ground surface, as the reference road, the method disclosed by the embodiment of the present application may further include: setting a difference between the actual heights of the subsidence road and the reference road as a negative value. Through setting the difference between the actual heights of the subsidence road and the reference road as a negative value, an accurate distinction between the roads above the ground and the roads below the ground may be realized, and actual road information may be accurately reflected and the accuracy of the drawing of a three-dimensional road network map may be ensured.

On the basis of the above technical solution, alternatively, the determining the set of associated roads with the covering relationship, includes:
determining at least one projecting intersection point between any target road in a preset overpass area and other roads in the preset overpass area, by performing a traversal of the projecting intersection points along the length direction of roads, using terrain data of roads; and
determining at least one set of associated roads with the covering relationship included in the preset overpass area according to the determined projecting intersection point.

Wherein, the terrain data of roads includes the actual height of a road, the covering relationship of roads, the slope gradient of a road, and the coordinates of latitude and longitude of a road, etc., which may relate to all roads in the two-dimensional road network. In an embodiment of the present application, as to any target road in a preset overpass area, projecting intersection points are traversed along the length direction of the road, to realize the determination of the complete covering relationship relating to each road, so as to ensure the accurate display of the relative elevations of each road at different positions during the drawing of a three-dimensional road network map, and to ensure the accurate transition from the road surface to the ground surface for avoiding such a phenomena that the omission of covering relationship and the error in determination of the relative elevations lead to fluctuation and faulting in a road surface.

The preset overpass area is an area set for the overpass scenario according to an embodiment of the present application, and is intended to cover each road belonging to the overpass and ensure the completeness of the traversal of the projecting intersection points for each road in the area. Exemplarily, the preset overpass area may be determined based on the intersection point between each road of the overpass and the ground, for example, the preset area of the overpass may be determined by directly using each of such intersection points as a boundary point of the area, or based on each intersection point, a preset distance is extended in the direction away from the overpass and the preset area of the overpass may be determined by using each extended point as a boundary point of the area, wherein the preset distance may be flexibly set as necessary.

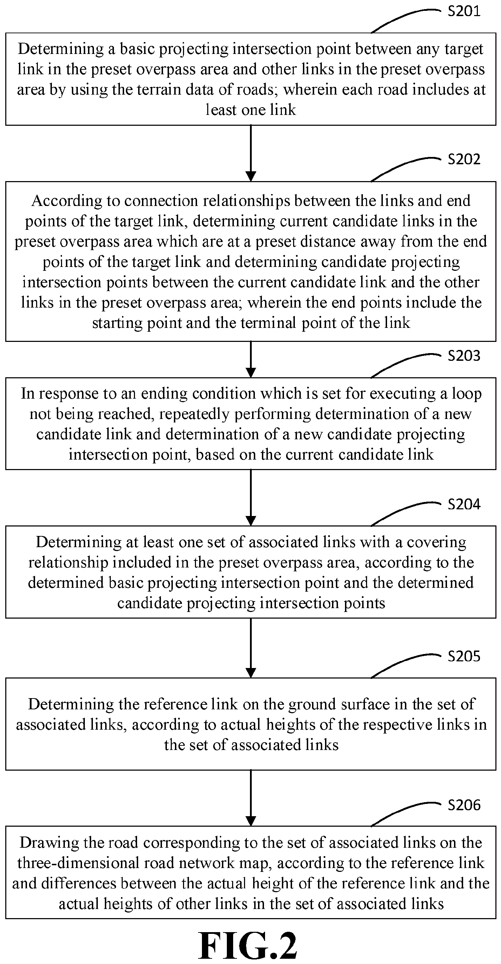

Further, FIG.2 is a flowchart of another method for drawing a three-dimensional road network map disclosed according to an embodiment of the present application, which is further optimized and expanded based on the above technical solution and may be combined with the above respective alternative implementations. As shown in FIG.2, the method may include:
S201, determining a basic projecting intersection point between any target link in the preset overpass area and other links in the preset overpass area by using the terrain data of roads; wherein each road includes at least one link.

Considering that the terrain data may be acquired in units of links during the acquisition of the terrain data of roads, projecting intersection points may be traversed link by link in the process of traversing the projecting intersection points of each road in the preset overpass area. Through traversing each link in the preset overpass area, the effect may also be achieved that the covering relationship of each road is completely determined. There exists corresponding relationships between links and road(s). The covering relationship between links may also denote the covering relationship between roads corresponding to the links. The target link may be any link included in any road in the preset overpass area. The other links in the preset overpass area mentioned in S201 may refer to links except the target link.

S202, according to connection relationships between the links in the preset overpass area and end points of the target link, determining current candidate links in the preset overpass area which are at a preset distance away from the end points of the target link and determining candidate projecting intersection points between the current candidate links and the other links in the preset overpass area; wherein the end points include a starting point and a terminal point of a link.

The terrain data of roads may also include the connecting relationships between end points of the respective links, or known as information of connection points of the road network (i.e. NODE point data). The determination of the current candidate link needs to follow the connecting relationships between links, that is, the current candidate link needs to be directly or indirectly connected to the current target link. Specifically, according to the end points of the current target link, in the direction of a connecting link of the current target link, a current candidate link at a preset distance away from the starting point of the current target link is determined and a current candidate link at a preset distance away from the terminal point of the current target link is determined. The value of the preset distance may be determined according to the level of a road connected to the starting point or the terminal point of a link, for example, as to different levels of roads, the preset distance may be set as different values, which is not specifically limited in the embodiment of the present application. Then, according to the covering relationships of the links in the road terrain data, the candidate projecting intersection points of a current candidate link and other links (the other links refer to links except the current candidate link) in the preset overpass area is determined.

S203, in response to an ending condition which is set for executing a loop not being reached, repeatedly performing determination of new candidate links and determination of new candidate projecting intersection points, based on current candidate links.

According to the actual values of links, a road usually includes multiple links, which is usually in units of meters. Therefore, when the ending condition set for the loop execution is not reached, it requires to continue to determine new candidate links based on the end points of the current candidate links (i.e. using the current candidate links as new target links) to ensure the completeness of the covering relationship relating to roads, and then to determine the projecting intersection points of the new candidate links and other links in the preset overpass area as new candidate projecting intersection points; the above operations are repeated until the ending condition set for the loop execution is reached. The ending condition for the loop execution may include, such as, that the cumulative number of the projecting intersection points determined as to the current roads meets a number threshold, under which circumstance it may be considered that the covering relationship relating to the current roads is completely determined. In addition, the ending condition for the loop execution may include that the current traverse of links reaches the boundary of the preset overpass area.

S204, determining at least one set of associated links with a covering relationship included in the preset overpass area, according to the determined basic projecting intersection point and the determined candidate projecting intersection point.

In an embodiment of the present application, as to each road in the preset overpass area, the projecting intersection points may be traversed per link and the positions of the repetitive projecting intersection points correspond to the same covering relationship. Due to the correspondence relationship between links and roads, a set of the associated links with a covering relationship also denotes a set of associated roads with a covering relationship.

S205, determining the reference link on the ground surface in the set of associated links according to the actual heights of the respective links in the set of associated links.

S206, drawing the roads corresponding to the set of associated links on the three-dimensional road network map according to the reference link and the difference between the actual heights of the reference link and other links in the set of associated links.

The other links in the set of associated links refer to the links, except the reference link, in the set of associated links. The links may be spliced and drawn according to the connecting relationship between links during the drawing of roads, so as to obtain a display of the complete road.

According to the technical solution of an embodiment of the present application, through the determination of the projecting intersection points in units of links in the preset overpass area, the determination of the complete covering relationship relating to each road is realized, and thus the accurate display of the relative elevations of each road in different positions, in the overpass area, is guaranteed during the drawing of a three-dimensional road network map, and the accurate transition from the road surface to the ground surface is ensured, and the phenomenon of fluctuation and faulting occurred in the road surface due to the omission of covering relationship and the error in determination of the relative elevations is avoided. At the same time, the embodiment of the present application solves the problem of poor authenticity of the three-dimensional effect of the road network caused by that only the virtual heights of all roads may be provided during the existing drawing method of a three-dimensional road network map, for example, in the existing solutions, the phenomenon that the heights of roads are almost the same is readily occurred in a road network with multiple levels being overlapped by each other. Due to the use of the accurate relative elevations of roads, the embodiment of the present application improves the display effect of the actual and differentiated heights of roads in a three-dimensional road network, realizes the accurate reproduction of the levels of actual roads and increases the accuracy of the drawing of a three-dimensional road network map.

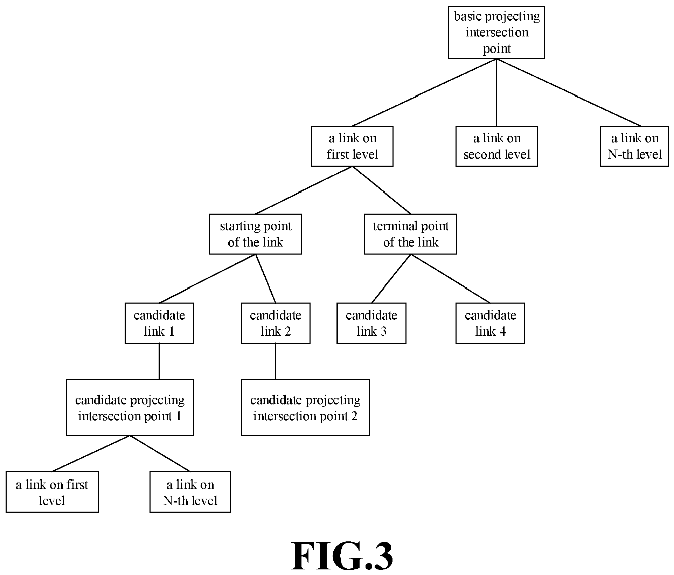

FIG.3 is a schematic diagram of the determination of the projecting intersection points provided according to an embodiment of the present application. As shown in FIG.3, an embodiment of the present application may create a list of projecting intersection points (ztable) in advance, and the initial values in the list are empty. Fist, a basic projecting intersection point is determined based on any target link and then filled into the list. The covering relationship corresponding to the basic projecting intersection point includes N levels of links, and of course, the target link belongs to one of the N levels of links. As shown in FIG.3, assuming that a target link belongs to a first level link shown in this figure, a candidate link 1 at a first preset distance L1 away from the starting point of the target link may be determined based on the connecting relationships between links and the starting point of the target link, and a candidate link 2 at a second preset distance L2 away from the starting point of the target link may also be determined, wherein the value of the first preset distance L1 may be predetermined according to the level of the road to which the candidate link L1 belongs, and the value of the second preset distance L2 may be predetermined according to the level of the road to which the candidate link L2 belongs, because the levels of the roads to which the candidate links belong may be predetermined according to the connecting relationships between links. Similarly, based on the connecting relationship between links and the terminal point of the target link, a candidate link 3 at a third preset distance L3 away from the terminal point of the target link may be determined, and a candidate link 4 at a fourth preset distance L4 away from the starting point of the target link may also be determined, wherein the value of the third preset distance L3 may be predetermined according to the level of the road to which the candidate link L3 belongs, and the value of the fourth preset distance L4 may be predetermined according to the level of the road to which the candidate link L4 belongs. Based on any candidate link, in the case of possessing a covering relationship, a candidate projecting intersection point may be determined and filled into the list, for example, the candidate projecting intersection point 1 may be determined based on the candidate link 1, and the candidate projecting intersection point 2 may be determined based on the candidate link 2. FIG.3 is merely an example and should not be interpreted as a specific limitation to the embodiments of the present application, as to the second level link and the N-th level link shown, the corresponding candidate projecting intersection points (not shown) may be determined in the same processing manner as that for the first level link.

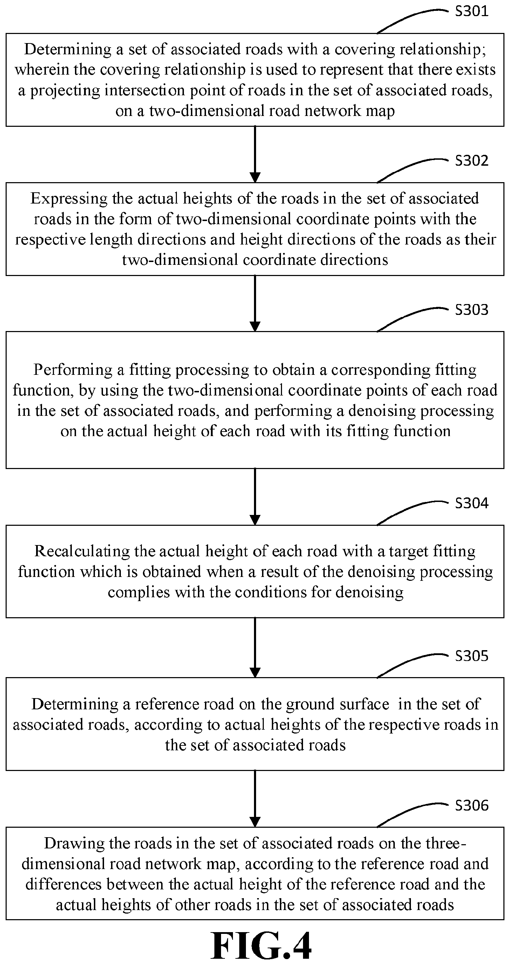

FIG.4 is a flowchart of another method for drawing a three-dimensional road network map disclosed according to an embodiment of the present application, which is a further optimization and expansion based on the above technical solution and may be combined with the above respective alternative implementations. As shown in FIG.4, the method may include:
S301, determining a set of associated roads with a covering relationship; wherein the covering relationship is used to represent that there exists a projecting intersection point of roads in the set of associated roads, on a two-dimensional road network map.
S302, expressing the actual heights of the roads in the set of associated roads in the form of two-dimensional coordinate points with the respective length directions and height directions of the roads as their two-dimensional coordinate directions.

For example, the data of the actual heights corresponding to any road may be represented by a series of two-dimensional coordinate point (x,y). x represents the distance between the current position and a preset reference point along the length direction of a road. The preset reference point is related to the setting of the coordinate system, for example, when the road data is acquired in units of links, the starting point of each link may be set as the preset reference point, and then x represents the distance between the current position on each link and the starting point of the link; y represents the actual height of the road corresponding to x, i.e. the absolute altitude.

S303, performing a fitting processing to obtain a corresponding fitting function, by using the two-dimensional coordinate points of each road in the set of associated roads, and performing a denoising processing on the actual heights of each road with its fitting function.

Here, the fitting processing may be a linear processing, but it is not limited to this. As for a linear processing, the line type for a fitting processing may be a straight line, a curve, or the like, and a preset line type of fitting processing (such as a linear fitting processing, a curve fitting processing) may be conducted in an embodiment of the present application. In such a case, after performing a fitting of a preset line type with the two-dimensional coordinate points of each road, the points at a distance exceeding the distance threshold away from a line represented by the current fitting function may be eliminated, so as to realize the object of denoising. Wherein the distance threshold may be set reasonably according to the denoising requirement. The specific implementation of the fitting of the line type may take the complete two-dimensional coordinate points of roads as the processing object, or may also take the two-dimensional coordinate points of each road segment as the processing objects by segmenting the roads. As mentioned above, the preset line type includes a straight line or a curve.

S304, recalculating the actual height of each road by using a target fitting function obtained when the result of the denoising processing satisfies the denoising condition.

Wherein the denoising condition is the pre-defined condition for determining that the current result of the denoising processing achieves the intended purpose, in other words, the executed end condition for defining the denoising loop. For example, the denoising condition may include that the number of the points deviating from a line represented by the fitting function in the remaining two-dimensional coordinate points is less than a number threshold, after the denoising processing; or that the average value of the distances between the remaining two-dimensional coordinate points and a line represented by the fitting function is less than a preset average value, after the denoising processing. Wherein both the number threshold and the preset average value may be set reasonably on the basis of ensuring a gentle change trend for measuring two-dimensional coordinate points.

If the result of the denoising processing satisfies a denoising condition after performing the fitting and the denoising processing for each road, the current fitting function is configured to be the target fitting function, and the actual height of the road is recalculated with the values of x in the two-dimensional coordinate points of the road to achieve the effect of smoothing height again and ensure the smooth display of the road lines on a three-dimensional road network map. If the result of the denoising processing does not satisfy the denoising condition after performing the fitting and the denoising processing once for each road, it is continued to perform the fitting and the denoising processing based on the current two-dimensional coordinate points after the denoising, until the result of the denoising processing satisfies the denoising condition. Then, the actual height of each road is recalculated for the determination of the reference road and the following determination of the height differences.

S305, determining a reference road on the ground surface in the set of associated roads, according to actual heights of the respective roads in the set of associated roads.

S306, drawing the roads in the set of associated roads on the three-dimensional road network map, according to the reference road and differences between the actual height of the reference road and the actual heights of other roads in the set of associated roads.

According to the technical solution of an embodiment of the present application, through performing processes of fitting, denoising and height recalculation on the actual height of each road in the set of associated roads with a covering relationship, double-smoothing the actual heights of roads is realized, the smooth display of the road lines on three-dimensional road network maps is ensured, which is very close to the real situation, and the high-quality display effect of a map is ensured. Also, through taking the differences of the actual heights between roads as the relative elevations of roads in the process of drawing a three-dimensional road network map, the problem of poor authenticity of the three-dimensional effect of the road network is solved, which is caused by that only the virtual heights of all roads may be provided during the current drawing method of a three-dimensional road network map, for example, in the existing solution, the phenomenon that the heights of roads are almost the same is readily occurred in a road network with multiple levels being overlapped by each other, and thus the accuracy of the drawing of a three-dimensional road network map is increased.

Based on the above technical solution, furthermore, the performing the fitting processing to obtain a corresponding fitting function by using the two-dimensional coordinate points of each road in the set of associated roads, and performing the denoising processing on the actual height of each road with its fitting function, includes:
performing a piecewise linear fitting processing on each of the roads in the set of associated roads to obtain a corresponding piecewise fitting function, by using the two-dimensional coordinate points of with the road, and performing a piecewise denoising processing on the actual height of each road with its piecewise fitting function; and
correspondingly, after recalculating the actual height of each road, the method disclosed by an embodiment of the present application further includes: performing a smoothing processing on the recalculated actual heights of segments of each of the roads at a splicing area, by using a smoothing processing algorithm of a preset curve.

Specifically, an embodiment of the present application may segment each road in the set of associated roads along the length direction to obtain at least one road segment, and perform the linear fitting with the two-dimensional coordinate points of the road segments; perform the denoising processing on the actual heights of the road segments with the linear fitting function; recalculate the actual heights of the road segments with the target fitting function obtained when the result of the denoising processing satisfies the denoising condition.

By controlling the granularity of the segmenting of roads and reasonably determining the length of each road segment (its specific value may be reasonably set as a matter of experiences), it may be considered that the actual height of each road segment follows a change with a line. Therefore, each road segment may be performed with linear fitting, for example, the fitting function may be expressed as a function in the form of y=kx+b, wherein y represents the height, x represents the position along the length direction of a road segment, and b represents a functional parameter. If after performing the linear fitting and the denoising processing once for each road segment, the result of the denoising processing satisfies the denoising condition, the current fitting function is configured to be the target fitting function, and the actual height of the road segment is recalculated with the values of x in the two-dimensional coordinate points of the road segment to achieve the effect of smoothing height again and ensure the smooth display of the road lines on the three-dimensional road network map. If after performing the linear fitting and the denoising processing once for each road segment, the result of the denoising processing does not satisfy the denoising condition, it is continued to perform the linear fitting and the denoising processing based on the two-dimensional coordinate points after the current denoising, until the result of the denoising processing satisfies the denoising condition. Then, the actual height of each road segment is recalculated for the determination of the reference road and the following determination of the height differences.

In addition, after the recalculation of the actual height as to the road segments of each road, with the smoothing algorithm according to a preset curve, such as Bezier curve smoothing algorithm or Lagrange smoothing algorithm and any other available smoothing algorithm, the recalculated actual heights of the road segments of each road in the splicing area are performed with a smoothing processing, that is, at the connection positions between road segments, and the recalculated actual height of the road is performed again with a smooth transition processing, ensuring the smoothness of the actual heights of roads as a whole.

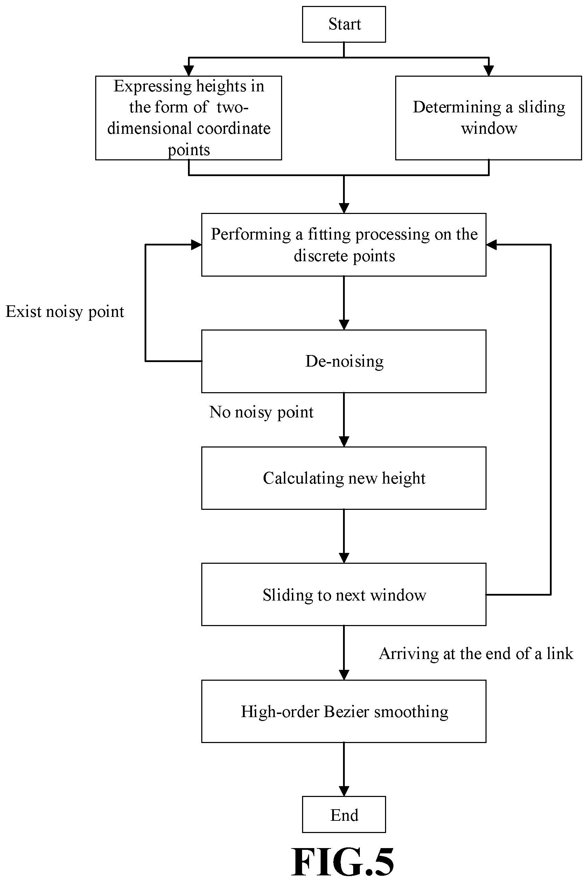

FIG.5 is a flow diagram of a smoothing processing of the actual heights of roads according to an embodiment of the present application. However, it should not be interpreted as a specific limitation on embodiments of the present application. Also, specifically, FIG.5 takes an example that a road includes at least one link and the road is divided in units of links to obtain at least one road segment, performing smoothing processing of the actual heights of roads in units of road segments. As shown in FIG.5, after starting the smoothing processing operation, first, the actual height of each of the roads is expressed in two dimension form, i.e. two-dimensional coordinate (x,y), and at the same time, the data sliding window is determined, i.e. the length of the road segment is determined, and the actual heights of roads within the sliding window are considered to follow a linear change; then, the discrete points within the current sliding window are performed with linear fitting to obtain a fitted straight line and the actual heights of roads are performed with denoising processing according to the distance between the discrete points and the fitted straight line; if the result of the denoising processing does not satisfy the denoising condition, it is considered that noise still remains, and it is continued to perform linear fitting and denoising processing based on the remaining two-dimensional coordinate points after the previous denoising, until the result of the denoising processing satisfies the denoising condition. If the denoising condition is satisfied, it is considered to be no noises, and the actual heights of roads within the current sliding window are recalculated based on the current target fitting function. Next, it is slid to the next window, i.e. the next road segment is performed with fitting and denoising processing and recalculation of its actual height. When the end of a link is reached, the recalculated actual height of the road is performed again with the smooth transition processing with the higher-order Bezier curve smoothing algorithm at the connecting positions between road segments, ensuring the smooth of the actual heights of links as a whole.

Based on the above technical solution, alternatively, the method disclosed by an embodiment of the present application may further include:
if there is a diverging road, the height difference between which and the ground surface is not 0 and which is connected to a pedestrian passage, that is, which includes the road above the ground surface, and may also include the tunnel road, according to projection of the road surface of the diverging road in the three-dimensional road network map on the two-dimensional road network map, the historical connection point between the diverging road and the pedestrian passage on the two-dimensional road network map is adjusted to determine the target connection point between the diverging road and the pedestrian passage on the three-dimensional road network map; and
according to the determined target connection point and the ground surface, the pedestrian passage is drawn on the three-dimensional road network map.

Considering that the display ways of road elements are different on the two-dimensional road network map and the three-dimensional road network map, for example, on the two-dimensional road network map, especially the non-high-definition road network map, roads are represented by line elements, while on the three-dimensional road network map, roads are displayed in a stereoscopic effect, including road surface and road heights, therefore, as to the roads with connecting relationship, the connection points between roads will be displayed differently in the two-dimensional and the three-dimensional road network maps. In order to ensure the accurate display of the connecting relationship between roads on three-dimensional road network maps, for example, to avoid the display effect that a pedestrian passage runs through the middle of a diverging road surface instead of being on the roadside, the historical connection points between roads on the two-dimensional road network map need to be adjusted to obtain the accurate target connection points which are suitable to be displayed on the three-dimensional road network maps.

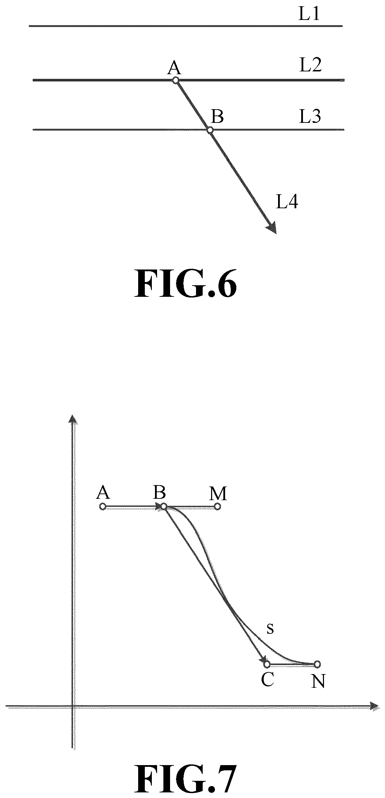

As shown in FIG.6, a schematic diagram of the connection point between a diverging road which is connected to a pedestrian passage and the pedestrian passage is shown, which should not be interpreted as a specific limitation on embodiments of the present application. Particularly, FIG.6 is a top view of the connecting relationship between roads. As shown in FIG.6, the straight line L2 is used to represent the display element of a diverging road on the two-dimensional road network map, the straight line L4 is used to represent the display element of a pedestrian passage on the two-dimensional road network map, the arrow direction indicates that the pedestrian passage points to the direction of the ground surface, and the point A represents a historical connection point between a diverging road and a pedestrian passage on the two-dimensional road network map. The straight line L1 and the straight line L3 represent the boundary lines of the projection of the road surface of the diverging road on the three-dimensional road network map on the two-dimensional road network map. According to the intersection point of the projecting boundary lines of the road surfaces and the pedestrian passage, such as an intersection point B shown in FIG.6, the target connection point between the diverging road and the pedestrian passage on the three-dimensional road network map is determined, the height of which is related to the actual height of the diverging road.

Specifically, the determination of the target connection point between a diverging road and a pedestrian passage on the three-dimensional road network map may include: according to the connecting relationship between the diverging road and the pedestrian passage, determining a target projecting boundary line of the road surface of the diverging road on the three-dimensional road network map on the two-dimensional road network map, wherein the target projecting boundary line connects the pedestrian passage, such as the straight line L3 as shown in FIG.6; according to the distance between the target projecting boundary line and the historical connection point as well as the included angle between the diverging road and the pedestrian passage on the two-dimensional road network map, determining a two-dimensional target point, for example, according to the distance between the straight line L3 and the point A as shown in FIG.6 as well as the included angle between the straight line L3 and the straight line L4 (the included angle may be determined during the acquisition of the terrain data of roads), determining a point B, which is an example of two-dimensional target point; according to the actual heights of the two-dimensional target point and the diverging road, determining the target connection point between the diverging road and the pedestrian passage on the three-dimensional road network map. And then, the connecting relationship between the diverging road and the pedestrian passage may be drawn on the three-dimensional road network map, based on the road information such as the target connection point, the slope gradient and the length of a pedestrian passage, and the like.

Further, the drawing of a pedestrian passage on the three-dimensional road network map according to the determined target connection point and the ground surface, includes:
according to the determined target connection point and the ground surface, determining the initial shape of the pedestrian passage on the three-dimensional road network map; specifically, the ground intersection point of the pedestrian passage and the ground surface may be determined according to the target connection point and the slope gradient and the length of the pedestrian passage, and the initial shape of the pedestrian passage on the three-dimensional road network map may be drawn according to the ground intersection and the target connection point, for example, the ground intersection point and the target connection point may be connected by lines;
determining the first control point based on the target connection point and determining the second control point based on the ground intersection point of the pedestrian passage and the ground surface; and
performing a smoothing processing on the initial shape with the target connection point, the first control point, the ground intersection point and the second control point, and drawing the target passage on the three-dimensional road network map. For example, a smoothing processing may be performed on the initial shape of the pedestrian passage with Bezier curve smoothing processing algorithm or Lagrange smoothing processing algorithm, or any other available smoothing algorithm. The first control point and the second control point may be set flexibly according to different smoothing algorithms. Also, there is no any limitation on order of the first control point and the second control point, and the difference of the two terms only exists in wording.

FIG.7 is a smooth schematic diagram of an initial shape of a pedestrian passage disclosed according to an embodiment of the present application, which should not be interpreted as a specific limitation on the embodiment of the present application. As shown in FIG.7, the point A corresponds to a historical connection point between a diverging road and a pedestrian passage on the two-dimensional road network map; the point B represents the target connection point between the diverging road and the pedestrian passage on the three-dimensional road network map; the plane of the line segment AB represents the road surface of the diverging road; the point C represents a ground intersection point of the pedestrian passage and the ground surface, and the plane of the line segment CN represents the ground surface. The control point M may be determined based on the point B along the direction of the line segment AB; the control point N may be determined based on the point C along the direction of the line segment CN; the length of the line segment BM and the line segment CN may be set reasonably according to the smoothing requirements, for example, they may be set as 1/n of the distance between the point B and the point C, that is, the control point M and the control point N may be determined according to the 1/n of the distance between the ground intersection point and the target connection point, wherein the value of n may be set flexibly and as an example, it may be set as 3 generally. The a smooth curve S may be obtained with the point B, the control point M, the point C and the control point N, based on Bezier curve smoothing processing algorithm, as a target line type of the pedestrian passage, and the target pedestrian passage is drawn on the three-dimensional road network map.

In the embodiment of the present application, through reasonably determining the target connection point between a diverging road and a pedestrian passage on the three-dimensional road network map, it is realized to accurately display the connecting relationship between roads on the three-dimensional road network map and avoid the display effect that the pedestrian passage runs through the middle of the diverging road surface instead of being on the roadside; through the smoothing processing of the line type of the pedestrian passage during drawing of the pedestrian passage, the map rendering effect is smoother and much closer to the reality, ensuring a high-quality display effect of a map.

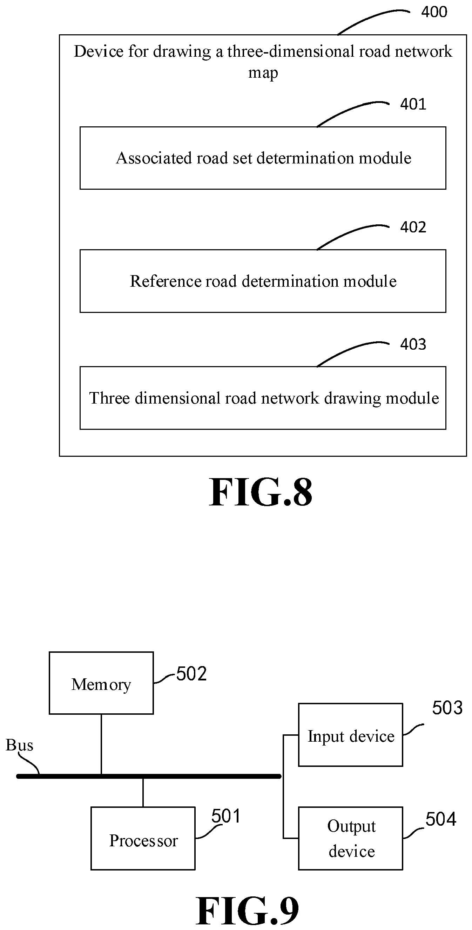

FIG.8 is a structural schematic diagram of a device for drawing a three-dimensional road network map disclosed by an embodiment of the present application, which is applicable to the situation of how to draw a three-dimensional road network map. The device disclosed by an embodiment of the present application may be implemented by software, hardware and/or firmware and may be integrated in any electronic apparatus with computing capability, such as a server, a vehicle terminal, a mobile terminal, a tablet computer, etc.

As shown in FIG.8, the device 400 for drawing a three-dimensional road network map disclosed by an embodiment of the present application may include an associated road set determination module 401, a reference road determination module 402 and a three-dimensional road network drawing module 403, wherein:
the associated road set determination module 401 is configured to determine a set of associated roads with a covering relationship; wherein the covering relationship is used to represent that there exists a projecting intersection point of roads in the set of associated roads, on a two-dimensional road network map;
the reference road determination module 402 is configured to determine a reference road on a ground surface in the set of associated roads, according to actual heights of the respective roads in the set of associated roads;
the three-dimensional road network drawing module 403 is configured to draw the roads in the set of associated roads on the three-dimensional road network map, according to the reference road and differences between the actual height of the reference road and the actual heights of other roads in the set of associated roads.

Alternatively, the associated road set determination module 401 may include:
a projecting intersection point determination unit, which is configured to determine at least one projecting intersection point between any target road in a preset overpass area and other roads in the preset overpass area, by performing a traversal of the projecting intersection points along the length direction of roads using terrain data of roads; and
a associated road set determination unit, which is configured to determine at least one set of associated roads with the covering relationship included in the preset overpass area, according to the determined projecting intersection point.

Alternatively, the projecting intersection point determination unit may include:
a basic projecting intersection point determination subunit, which is configured to determine a basic projecting intersection point between any target link in the preset overpass area and other links in the preset overpass area by using the terrain data of roads; wherein each road includes at least one link;
a candidate projecting intersection point determination subunit, which is configured to, according to connection relationships between the links in the preset overpass area and end points of the target link, determine current candidate links in the preset overpass area which are at a preset distance away from the ends point of the target link and determine candidate projecting intersection points between the current candidate link and the other links in the preset overpass area; wherein the end points include a starting point and a terminal point of a link; and
a repetitive determination subunit, which is configured to, in response to an ending condition which is set for executing a loop not being reached, repeatedly perform determination of a new candidate link and determination of a new candidate projecting intersection point, based on the current candidate link.

Correspondingly, the associated road set determination unit is configured to:
determine at least one set of associated links with covering relationship included in the preset overpass area, according to the determined basic projecting intersection point and the determined candidate projecting intersection point.

Alternatively, the reference road determination module 402 may include:
a height analysis unit, which is configured to successively analyze changes of the actual heights of the roads on each level, according to a from-bottom-to-top hierarchical relationship between the roads in the set of associated roads; and
a reference road determination unit, which is configured to determine a predetermined road, whose regularity of the change of the actual height meets a condition of the ground surface, as the reference road.

Alternatively, the device disclosed by an embodiment of the present application may further include:
a subsidence road marking module, which is configured to, in a case that there exists such a road that its actual height at both sides of the projecting intersection point is greater than that at the projecting intersection point, during successively analyzing the changes of the actual heights of the roads on each level, mark the road as a subsidence road;
correspondingly, the device disclosed by an embodiment of the present application may also includes a difference setting module, which is configured to:
   after the reference road determination unit executes the operation of determining the predetermined road, whose regularity of the change of the actual height complies with the condition of the ground surface, as the reference road, set the difference between the actual heights of the subsidence road and the reference road as a negative value.

Alternatively, the device disclosed by an embodiment of the present application may further include:
a coordinate representation module, which is configured to, before the reference road determination module 402 executes the operation of determining the reference road on the ground surface in the set of associated roads according to the actual heights of the respective roads in the set of associated roads, express the actual heights of the roads in the set of associated roads in the form of two-dimensional coordinate points with the respective length directions and height directions of the roads as their two-dimensional coordinate directions;
a fitting and denoising module, which is configured to perform a fitting processing to obtain a corresponding fitting function, by using the two-dimensional coordinate points of each road in the set of associated roads, and performing a denoising processing on the actual height of each road with its fitting function; and
a height recalculation module, which is configured to recalculate the actual height of each road by using a target fitting function obtained when the result of the denoising processing satisfies the denoising condition.

Alternatively, the fitting and denoising module may be specifically configured to:
perform a piecewise linear fitting processing on each of the roads in the set of associated roads to obtain a corresponding piecewise fitting function, by using the two-dimensional coordinate points of the road, and performing a piecewise denoising processing on the actual height of each of the roads with its piecewise fitting function;
correspondingly, the device disclosed by an embodiment of the present application may further include:
a splicing and smoothing processing module, which is configured to perform a smoothing processing on the recalculated actual heights of segments of each of the roads at a splicing area, by using a smoothing processing algorithm of a preset curve, after the height recalculation module executes the operation of recalculating the actual height of each road.

Alternatively, the device disclosed by an embodiment of the present application may further include:
a connection point determination module, which is configured to, in a case that there exists a diverging road with a height difference between the diverging road and the ground surface not being zero, and connected to a pedestrian passage, adjust a historical connection point between the diverging road and the pedestrian passage on the two-dimensional road network map, according to a projection of the road surface of the diverging road in the three-dimensional road network map on the two-dimensional road network map, and determine a target connection point between the diverging road and the pedestrian passage on the three-dimensional road network map; and
a pedestrian passage drawing module, which is configured to draw the pedestrian passage on the three-dimensional road network map according to the determined target connection point and the ground surface.

Alternatively, the pedestrian passage drawing module may include:
an initial shape determination unit, which is configured to determine an initial shape of the pedestrian passage on the three-dimensional road network map, according to the determined target connection point and the foundation plane;
a control point determination unit, which is configured to determine a first control point based on the target connection point, and determine a second control point based on a ground intersection point of the pedestrian passage and the ground surface; and
a pedestrian passage smoothing unit, which is configured to, by using the target connection point, the first control point, the ground intersection point and the second control point performing a smoothing processing on the initial shape and draw the target passage on the three-dimensional road network map.

Alternatively, the connection point determination module may include:
a projecting boundary line determination unit, which is configured to determine a target boundary line of the projection of the road surface of the diverging road in the three-dimensional road network map on the two-dimensional road network map; wherein the target boundary line of the projection connects with the pedestrian passage;
a two-dimensional target point determination unit, which is configured to determine a two-dimensional target point according to the distance between the target boundary line of projection and the historical connection point and the included angle between the diverging road and the pedestrian passage on the two-dimensional road network map;
a target connection point determination unit, which is configured to determine the target connection point between the diverging road and the pedestrian passage on the three-dimensional road network map, according to the actual heights of the two-dimensional target point and the diverging road.

The device 400 for drawing a three-dimensional road network map disclosed by an embodiment of the present application may execute any method for drawing a three-dimensional road network map disclosed by an embodiment of the present application, having corresponding functional modules and beneficial effects for implementing the method. As to the content not descripted in detail in the device embodiments of the present application, it may be referred to the description of any method embodiments of the present application.

According to an embodiment of the present application, an embodiment of the present application also provide an electronic apparatus and a readable storage medium.

As shown in FIG.9, FIG.9 is a block diagram of an electronic apparatus for implementing the method for drawing a three-dimensional road network map of an embodiment of the present application. An electronic apparatus is intended to represent various forms of digital computers, such as laptop computers, desktop computers, workstations, personal digital assistants, servers, blade severs, mainframe computers and other appropriate computers. An electronic apparatus may also represent various forms of mobile devices, such as personal digital processing, cellular phones, smart phones, wearable devices and other similar computing devices. The components described herein, their connections and relations and their functions are only examples and are not intended to limit the implementation of an embodiment of the present application described and/or required herein.

As shown in FIG.9, the electronic apparatus includes: one or more processor 501, a memory 502, and interfaces for connecting various components, including high-speed interfaces and low-speed interfaces. Respective components are connected to each other by different buses and may be installed on a common motherboard or installed in other ways as required. A processor may process the instructions executed within an electronic apparatus, including the instructions stored in or on a memory in order to display instructions of graphic information of a graphical user interface (GUI) on an external input/output device (e.g. a display device coupled to an interface). In other implementations, multiple processors and/or multiple buses may be used in conjunction with multiple memories and multiple memories, if required. Similarly, multiple electronic devices may be connected, and each device provides part of the necessary operations, for example, serving as a server array, a set of blade servers, or multiple-processor system. FIG.9 takes an example of a processor 501.

Memory 502 is a non-transitory computer-readable storage medium provided by an embodiment of the present application. Wherein, a memory stores the instructions that may be executed by at least one processor, so that at least one processor executes the method for drawing a three-dimensional road network map provided by an embodiment of the present application. The non-transitory computer-readable storage medium of an embodiment of the present application stores computer instructions which are used to cause a computer to execute the method for drawing a three-dimensional road network map provided by an embodiment of the present application.

As a non-transitory computer-readable storage medium, the memory 502 may be used to store non-transitory software programs, non-transitory computer executable programs and modules, such as programs/modules corresponding to the method for drawing a three-dimensional road network map of an embodiment of the present application, for example, the associated road set determination module 401, reference road determination module 402 and three-dimensional road network drawing module 403 as shown in FIG.8. The processor 501 may execute respective functional applications and data processing of an electronic apparatus, i.e. implement the method for drawing a three-dimensional road network map of the above method embodiment, by running non-transitory software programs, instructions and modules stored in memory 502.

The memory 502 may include program memory area and data storage area, wherein the program memory area may store the application program required by at least one function of the operation system; the data storage area may store the data created according to the use of an electronic apparatus. In addition, the memory 502 may include high-speed random-access memory and non-transitory memory, for example, at least one magnetic storage device, a flash memory device, or other non-transitory solid-state memory devices. In some embodiments, the memory 502 alternatively includes a memory configured remotely with respect to the processor 501. These remote memories may be connected to the electronic apparatus for implementing the method for drawing a three-dimensional road network map of the present embodiments via network. Examples of the foresaid network include, but are not limited to, the internet, the intranet, local area network, mobile communication networks and combinations thereof.

The electronic apparatus for implementing the method for drawing a three-dimensional road network map of an embodiment of the present application may also include: an input device 503 and an output device 504. The processor 501, the memory 502, the input device 503 and the output device 504 may be connected by buses or other ways. The embodiment of FIG.9 takes an example of buses.

The input device 503 may receive numeric or character information entered and generate key signal input related to user settings and function control of an electronic apparatus for drawing a three-dimensional road network map of the present embodiments, such as a touch screen, a keypad, a mouse, a trackpad, a touchpad, a pointing stick, one or more mouse buttons, a trackball, a joystick and other input devices. The output device 504 may include a display device, an auxiliary lighting device and a haptic feedback device, etc. wherein the auxiliary lighting device such as a Light Emitting Diode (LED); the haptic feedback device such as a vibration motor, etc. The display device may include, but is not limited to, a liquid crystal display (LCD), a LED display and plasma display. In some embodiments, a display device may be a touch screen.

Various implementations of the systems and technologies described herein may be implemented in digital electronic circuit systems, integrated circuit systems, application specific integrated circuits (ASIC), a computer hardware, a firmware, a software, and/or combinations thereof. These respective implementations may include: implementation in one or more computer programs executable on and/or interpretable on a programmable system including at least one programmable processor, which may be a dedicated or general-purpose programmable processor that may receive data and instructions from a storage system, at least one input device, and at least one output device, and transmit the data and instructions to the storage system, the at least one input device, and the at least one output device.

These computing programs, also known as programs, software, software applications, or code, include machine instructions of a programmable processor and may be implemented using high-level procedural and/or object-oriented programming languages, and/or assembly/machine languages. As used herein, the terms "machine-readable medium" and "computer-readable medium" refer to any computer program product, device, and/or device used to provide machine instructions and/or data to a programmable processor, for example, magnetic disks, optical disks, memories, and programmable logic devices (PLD), including machine-readable media that receive machine instructions as machine-readable signals. The term "machine-readable signal" refers to any signal used to provide machine instructions and/or data to a programmable processor.

In order to provide interaction with the user, the systems and techniques described herein may be implemented on a computer having a display device for displaying information to the user, for example, a CRT (Cathode Ray Tube) or LCD (liquid crystal display) monitor; and a keyboard and pointing device such as a mouse or trackball, through which the user may provide input to a computer. Other kinds of devices may also be used to provide interaction with the user; for example, the feedback provided to the user may be any form of sensory feedback, for example, visual feedback, auditory feedback, or haptic feedback; and may be in any form, including acoustic input, speech input, or tactile input, to receive input from the user

The systems and technologies described herein may be implemented in a computing system including background components, for example, as a data server, or a computing system including middleware components, for example, an application server, or a computing system including front-end components, for example, a user computer with a graphical user interface or a web browser, through which the user may interact with the implementation of the systems and technologies described herein, or a computer system including any combination of such background components, middleware components, or front-end components. The components of the system may be interconnected by any form or medium of digital data communication such as a communication network. Examples of communication networks include: a local area network (LAN), a wide area network (WAN), the Internet and a block-chain network.

Computer systems may include clients and servers. The client and server are generally remote from each other and typically interact through a communication network. The client-server relation is generated by computer programs running on the respective computers and having a client-server relation with each other.

According to the technical solution of an embodiment of the present application, through combination of the actual heights of roads and the data of covering relationship of roads during the drawing of a three-dimensional road network map, the relative elevations between roads may be calculated quickly and accurately, ensuring the accuracy of the height differences and increasing the accuracy of the drawing of a three-dimensional road network map.

It should be understood that the respective forms of processes shown above may be used to reorder, add, or delete steps. For example, the steps described in the present application may be executed in parallel, sequentially, or in different orders. As long as the desired results of the technical solutions disclosed in the present application may be achieved, there is no limitation herein.

The foregoing specific implementations do not constitute a limitation on the protection scope of the present application. It should be understood by those skilled in the art that respective modifications, combinations, sub-combinations, and substitutions may be made according to design requirements and other factors. Any modification, equivalent replacement and improvement made within the spirit and principle of the present application shall be included in the protection scope of the present application.

## Claims

1. A method for drawing a three-dimensional road network map, comprising:
determining (S101) a set of associated roads with a covering relationship; wherein the covering relationship is used to represent that there exists a projecting intersection point of roads in the set of associated roads, on a two-dimensional road network map;
determining (S102) a reference road on a ground surface in the set of associated roads, according to actual heights of the respective roads in the set of associated roads; and
drawing (S103) the roads in the set of associated roads on the three-dimensional road network map, according to the reference road and differences between the actual height of the reference road and the actual heights of other roads in the set of associated roads.

2. The method according to claim 1, wherein the determining (S101) the set of associated roads with the covering relationship, comprises:
determining at least one projecting intersection point between any target road in a preset overpass area and other roads in the preset overpass area, by performing a traversal of the projecting intersection points along the length direction of roads, using terrain data of roads; and
determining at least one set of associated roads with the covering relationship included in the preset overpass area, according to the determined projecting intersection point.

3. The method according to claim 2, wherein the determining at least one projecting intersection point between any target road in the preset overpass area and other roads in the preset overpass area, by performing the traversal of the projecting intersection points along the length direction of roads, using the terrain data of roads, comprises:
determining (S201) a basic projecting intersection point between any target link in the preset overpass area and other links in the preset overpass area by using the terrain data of roads; wherein each road includes at least one link;
according to connection relationships between end points of the target link and the links, determining current candidate links in the preset overpass area which are at a preset distance away from the end points of the target link and determining candidate projecting intersection points between the current candidate links and the other links in the preset overpass area (S202); wherein the end points include the starting point and the terminal point of the link;
in response to an ending condition which is set for executing a loop not being reached, repeatedly performing (S203) determination of a new candidate link and determination of a new candidate projecting intersection point, based on the current candidate link;
correspondingly, the determining at least one set of associated roads with the covering relationship included in the preset overpass area, according to the determined one projecting intersection point, comprises:
determining (S204) at least one set of associated links with a covering relationship included in the preset overpass area, according to the determined basic projecting intersection point and the determined candidate projecting intersection points.

4. The method according to any one of claims 1∼3, wherein the determining (S102) the reference road on the ground surface in the set of associated roads, according to the actual heights of the respective roads in the set of associated roads, comprises:
successively analyzing changes of the actual heights of the roads on each level, according to a from-bottom-to-top hierarchical relationship between the roads in the set of associated roads; and
determining a predetermined road, whose regularity of the change of the actual height complies with the condition of the ground surface, as the reference road;
optionally, the method further comprises:
in a case that there exists such a road that its actual height at both sides of a projecting intersection point is greater than that at the projecting intersection point, during successively analyzing the changes of the actual heights of the roads on each level, marking the road as a subsidence road;
correspondingly, after the determining the predetermined road, whose regularity of the change of the actual height complies with the condition of the ground surface, as the reference road, the method further comprises:
setting the difference between the actual heights of the subsidence road and the reference road as a negative value.

5. The method according to any one of claims 1∼4, wherein prior to the determining the reference road on the ground surface in the set of associated roads, according to the actual heights of the respective roads in the set of associated roads, the method further comprises:
expressing (S302) the actual heights of the roads in the set of associated roads in the form of two-dimensional coordinate points with the respective length directions and height directions of the roads as their two-dimensional coordinate directions;
performing (S303) a fitting processing to obtain a corresponding fitting function, by using the two-dimensional coordinate points of each road in the set of associated roads, and performing a denoising processing on the actual height of each road with its fitting function; and
recalculating (S304) the actual height of each road with a target fitting function obtained when a result of the denoising processing complies with the condition for denoising;
optionally, the performing (S303) the fitting processing to obtain the corresponding fitting function, by using the two-dimensional coordinate points of each road in the set of associated roads, and performing the denoising processing on the actual height of each road with its fitting function, comprises:
performing a piecewise linear fitting processing on each of the roads in the set of associated roads to obtain a corresponding piecewise fitting function, by using the two-dimensional coordinate points of the road, and performing a piecewise denoising processing on the actual height of each road with its piecewise fitting function;
correspondingly, after the recalculating the actual height of each road, the method further comprises:
performing a smoothing processing on the recalculated actual heights of segments of each of the roads at a splicing area, by using a smoothing processing algorithm of a preset curve.

6. The method according to any one of claims 1∼5, wherein the method further comprises:
in a case that there exists a diverging road with a height difference between the diverging road and the ground surface not being zero, and connected to a pedestrian passage, adjusting a historical connection point between the diverging road and the pedestrian passage on the two-dimensional road network map, according to a projection of the road surface of the diverging road in the three-dimensional road network map on the two-dimensional road network map, and determining a target connection point between the diverging road and the pedestrian passage on the three-dimensional road network map; and
drawing the pedestrian passage on the three-dimensional road network map, according to the determined target connection point and the ground surface;
optionally, the drawing the pedestrian passage on the three-dimensional road network map, according to the determined target connection point and the ground surface, comprises:
determining an initial shape of the pedestrian passage on the three-dimensional road network map, according to the determined target connection point and the ground surface;
determining a first control point based on the target connection point, and determining a second control point based on a ground intersection point of the pedestrian passage and the ground surface; and
performing a smoothing processing on the initial shape by using the target connection point, the first control point, the ground intersection point and the second control point, and drawing a target pedestrian passage on the three-dimensional road network map.

7. The method according to claim 6, wherein the adjusting the historical connection point between the diverging road and the pedestrian passage on the two-dimensional road network map, according to the projection of the road surface of the diverging road in the three-dimensional road network map on the two-dimensional road network map, and determining a target connection point between the diverging road and the pedestrian passage on the three-dimensional road network map, comprises:
determining a target boundary line of the projection of the road surface of the diverging road in the three-dimensional road network map on the two-dimensional road network map; wherein the target boundary line of the projection connects with the pedestrian passage;
determining a two-dimensional target point, according to the distance between the target boundary line of the projection and the historical connection point and an included angle included angle between the diverging road and the pedestrian passage on the two-dimensional road network map; and
determining a target connection point on the three-dimensional road network map formed by the diverging road and the pedestrian passage, according to the actual heights of the diverging road and the two-dimensional target point.

8. A device (400) for drawing a three-dimensional road network map, comprising:
an associated road set determination module (401) configured for determining a set of associated roads with a covering relationship; wherein the covering relationship is used to represent that there exists a projecting intersection point of roads in the set of associated roads, on a two-dimensional road network map;
a reference road determination module (402) configured for determining a reference road on a ground surface in the set of associated roads, according to actual heights of the respective roads in the set of associated roads; and
a three-dimensional road network drawing module (403) configured for drawing the roads in the set of associated roads on the three-dimensional road network map, according to the reference road and differences between the actual height of the reference road and the actual heights of other roads in the set of associated roads.

9. The device according to claim 8, wherein the associated road set determination module (401) comprises:
a projecting intersection point determination unit, which is configured to determine at least one projecting intersection point between any target road in a preset overpass area and other roads in the preset overpass area, by performing a traversal of the projecting intersection points along the length direction of roads, using terrain data of roads; and
an associated road set determination unit, which is configured to determine at least one set of associated roads with the covering relationship included in the preset overpass area, according to the determined projecting intersection point;
optionally, the projecting intersection point determination unit comprises:
a basic projecting intersection point determination subunit, which is configured to determine a basic projecting intersection point between any target link in the preset overpass area and other links in the preset overpass area by using the terrain data of roads; wherein each road includes at least one link;
a candidate projecting intersection point determination subunit, which is configured to, according to connection relationships between end points of the target link and the links, determine current candidate links in the preset overpass area which are at a preset distance away from the end points of the target link and determine candidate projecting intersection points between the current candidate links and the other links in the preset overpass area; wherein the end points include the starting point and the terminal point of the link; and
a repetitive determination subunit, which is configured to, in response to an ending condition which is set for executing a loop not being reached, repeatedly perform determination of a new candidate link and determination of a new candidate projecting intersection point, based on the current candidate link;
correspondingly, the associated road set determination unit is configured to:
determine at least one set of associated links with a covering relationship included in the preset overpass area, according to the determined basic projecting intersection point and the determined candidate projecting intersection points.

10. The device according to claim 8 or 9, wherein the reference road determination module (402) comprises:
a height analysis unit, which is configured to successively analyze changes of the actual heights of the roads on each level, according to a from-bottom-to-top hierarchical relationship between the roads in the set of associated roads; and
a reference road determination unit, which is configured to determine a predetermined road, whose regularity of the change of the actual height complies with the condition of the ground surface, as the reference road;
optionally, the device (400) further comprises:
a subsidence road marking module, which is configured to, in a case that there exists such a road that its actual height at both sides of a projecting intersection point is greater than that at the projecting intersection point, during successively analyzing the changes of the actual heights of the roads on each level, mark the road as a subsidence road;
correspondingly, the device further comprises a difference setting module which is configured to:
after the reference road determination unit executes the operation of determining the predetermined road, whose regularity of the change of the actual height complies with the condition of the ground surface, as the reference road, set the difference between the actual heights of the subsidence road and the reference road as a negative value.

11. The device according to any one of claims 8∼10, wherein the device (400) further comprises:
a coordinate expression module, which is configured to, before the reference road determination module executes the operation of determining the reference road on the ground surface in the set of associated roads, according to the actual heights of the respective roads in the set of associated roads, express the actual heights of the roads in the set of associated roads in the form of two-dimensional coordinate points with the respective length directions and height directions of the roads as their two-dimensional coordinate directions;
a fitting and denoising module, which is configured to perform a fitting processing to obtain a corresponding fitting function, by using the two-dimensional coordinate points of each road in the set of associated roads, and perform a denoising processing on the actual height of each road with its fitting function;
a height recalculation module, which is configured to recalculate the actual height of each road by using a target fitting function obtained when a result of the denoising processing complies with the condition for denoising;
optionally, the fitting and denoising module is specifically configured to:
perform a piecewise linear fitting processing on each of the roads in the set of associated roads to obtain a corresponding piecewise fitting function, by using the two-dimensional coordinate points of the road, and perform a piecewise denoising processing on the actual height of each road with its piecewise fitting function;
correspondingly, the device (400) further comprises:
a splicing and smoothing processing module, which is configured to perform a smoothing processing on the recalculated actual heights of segments of each of the roads at a splicing area, by using a smoothing processing algorithm of a preset curve, after the height recalculation module executes the operation of recalculating the actual height of each road.

12. The device according to any one of claims 8∼11, wherein the device (400) further comprises:
a connection point determination module, which is configured to, in a case that there exists a diverging road with a height difference between the diverging road and the ground surface not being zero, and connected to a pedestrian passage, adjust a historical connection point between the diverging road and the pedestrian passage on the two-dimensional road network map, according to a projection of the road surface of the diverging road in the three-dimensional road network map on the two-dimensional road network map, and determine a target connection point between the diverging road and the pedestrian passage on the three-dimensional road network map;
a passage drawing module, which is configured to draw the pedestrian passage on the three-dimensional road network map, according to the determined target connection point and the ground surface;
optionally, the pedestrian passage drawing module comprises:
an initial shape determination unit, which is configured to determine an initial shape of the pedestrian passage on the three-dimensional road network map, according to the determined target connection point and the ground surface;
a control point determination unit, which is configured to determine a first control point based on the target connection point, and determine a second control point based on a ground intersection point of the pedestrian passage and the ground surface; and
a pedestrian passage smoothing unit, which is configured to perform a smoothing processing on the initial shape by using the target connection point, the first control point, the ground intersection point and the second control point, and draw a target pedestrian passage on the three-dimensional road network map;
optionally, the connection point determination module comprises:
a projecting boundary line determination unit, which is configured to determine a target boundary line of the projection of the road surface of the diverging road in the three-dimensional road network map on the two-dimensional road network map; wherein the target boundary line of the projection connect with the pedestrian passage;
a two-dimensional target point determination unit, which is configured to determine a two-dimensional target point according to a distance between the target boundary line of projection and the historical connection point and an included angle between the diverging road and the pedestrian passage on the two-dimensional road network map; and
a target connection point determination unit, which is configured to determine a target connection point between the diverging road and the pedestrian passage on the three-dimensional road network map, according to the actual heights of the diverging road and the two-dimensional target point.

13. An electronic apparatus comprises:
at least one processor (501); and
a memory (502) communicatively connected to the at least one processor; wherein
the memory stores instructions executable by the at least one processor, the instructions, when executed by the at least one processor, cause the at least one processor to perform the method for drawing a three-dimensional road network map according to any one of claims 1-7.

14. A non-transitory computer-readable storage medium storing computer instructions, wherein the computer instructions, when executed by a computer, cause the computer to execute the method for drawing a three-dimensional road network map according to any one of claims 1-7.

15. A computer program product comprising computer program instructions, the computer program instructions, when executed by a computer, cause the computer to perform the method according to any one of claims 1 to 7.
